Europäisches Patentamt

European Patent Office

Office européen des brevets

(19)

(11) Veröffentlichungsnummer: **0 097 169**
**B1**

(12) # EUROPÄISCHE PATENTSCHRIFT

(45) Veröffentlichungstag der Patentschrift:
30.04.86

(51) Int. Cl.⁴: **F 16 H 25/20, F 16 H 25/02**

(21) Anmeldenummer: 82903448.7

(22) Anmeldetag: 07.12.82

(86) Internationale Anmeldenummer:
**PCT/CH 82/00129**

(87) Internationale Veröffentlichungsnummer:
**WO 83/02141 (23.06.83 Gazette 83/15)**

(54) **LINEAR-ANTRIEBSVORRICHTUNG MIT ZWEI MOTOREN.**

(30) Priorität: 18.12.81 CH 8103/81
24.08.82 CH 5025/82

(43) Veröffentlichungstag der Anmeldung:
04.01.84 Patentblatt 84/1

(45) Bekanntmachung des Hinweises auf die Patenterteilung:
30.04.86 Patentblatt 86/18

(84) Benannte Vertragsstaaten:
**AT BE DE FR GB LU NL SE**

(56) Entgegenhaltungen:
**CH - A - 495 517**
**US - A - 2 481 477**
**US - A - 2 630 022**
**US - A - 3 202 009**

**Control ENgineering, Band 7, No.6, Juni 1960
(New-York, US) D.L.Schrader:"Unique electric thruster
uses two motors", Seite 141**

(73) Patentinhaber: **Lars International S.A. Luxembourg, 25,
Rue Notre Dame, L-Luxemburg (LU)**

(72) Erfinder: **Ficklen, Hans, Weidstrasse 18,
CH-8542 Wiesendangen (CH)**

(74) Vertreter: **Lusuardi, Werther Giovanni, Dr., Patentanwalt
Stockerstrasse 8, CH-8002 Zürich (CH)**

## Beschreibung

Die Erfindung bezieht sich auf eine Linear-Antriebsvorrichtung mit einer Schraubspindel, einer Mutter und zwei Antriebsmotoren, wovon der erste Antriebsmotor die drehbare, bezüglich des Antriebsmotors axial fest gelagerte Schraubspindel treibt. Eine solche Vorrichtung hat gegenüber einer Vorrichtung, die nur mit einem Motor arbeitet, der beispielsweise die Spindel antreibt, den Vorteil eines viel grösseren Regelbereiches für die Vorschubgeschwindigkeit.

Ein schleichender, sehr langsamer Vorschub lässt sich erreichen, wenn beide Motoren den gleichen Drehsinn haben, aber mit einem geringen Tourenzahl-Unterschied betrieben werden. Ein schneller Vorschub lässt sich erreichen, wenn nur ein Motor betrieben wird und der andere Motor stillsteht und schliesslich lässt sich ein sehr schneller Vorschub erzielen wenn die Motoren gegenläufig betrieben werden.

### Stand der Technik

Die US-PS 2.630.022, aus der die Merkmale des Obergriffs des Anspruchs 1 bekannt sind, zeigt eine Linear-Antriebsvorrichtung mit zwei Motoren in offener Bauweise. Die Motorachsen verlaufen senkrecht zur Spindelachse und treiben die Spindel beziehungsweise die Mutter je über ein eigenes Schneckengetriebe. Der bauliche Aufwand ist dadurch relativ gross und es lässt sich kein sauberer kompakter Aufbau der Vorrichtung erzielen. In der Patentschrift wird die Verwendung des Antriebes in Flugzeugen vorgeschlagen, wobei als besonderer Vorteil hervorgehoben wird, dass der Antrieb auch noch betriebsfähig bleibt, wenn einer der beiden Motoren ausfällt. Dies trifft natürlich für alle derartige Linear-Antriebsvorrichtungen zu, wenn diese mit zwei Motoren betrieben werden.

Die US-PS 2.481.477 (Peery) zeigt eine zweimotorige Linear-Antriebsvorrichtung, bei der ein Motor die Spindel direkt antreibt. Der Motor, der die Mutter antreibt, liegt neben der Spindel und treibt die Mutter über ein Zahnradgetriebe an.

Die CH-PS 495 517 (WESTMORELAND) zeigt eine Vorrichtung zur Erzeugung einer hin-und hergehenden Bewegung, bestehend aus zwei Hohlwellenmotoren mit einer zentralen drehbaren Welle. Der erste Motor sitzt auf einem mit einem Gewinde versehenen Abschnitt der Welle, während der zweite Motor über einen mit Längskeilen versehenen Abschnitt der Welle angeordnet ist. Der erste Motor weist ein mit einem Innengewinde versehenes angetriebenes hülsenförmiges Element auf, das in der Art einer Mutter auf dem Gewindeabschnitt der Welle aufgesetzt ist. Der zweite Motor besitzt ein mit nach innen offenen Längsnuten versehenes angetriebenes hülsenförmiges Element, welches mit dem mit Längskeilen versehenen Abschnitt der Welle zusammenarbeitet. Werden beide Motoren gleichsinnig betrieben so dreht sich die Welle mit der gleichen Drehgeschwindigkeit, ruht aber in Axialrichtung. Wird einer der Motoren mit einer unterschiedlichen Geschwindigkeit betrieben, dann bewegt sich die Welle in Axialrichtung.

Bei dieser Vorrichtung übertragen die hülsenförmigen Elemente das Drehmoment ausschliesslich radial auf die Welle und stellen somit keine das Antriebsmoment axial übertragendeAntriebsrohre dar. Bedingt durch das Hohlwellenprinzip nuss diese Vorrichtung nach dem Stand der Technik eine erhebliche Minimalgrösse aufweisen, was Miniaturantriebe ausschliesst. Aber selbst bei grösseren Vorrichtungen ist das nicht frei wählbare Verhältnis von Motorgrösse und Wellendurchmesser sehr ungünstig. Eine für Präzisionsvorrichtungen sich aufdrängende Verwendung von Kugelumlaufmuttern scheidet bei dieser Hohlwellenmotorvorrichtung aus,da die asymmetrische Kugelumlaufmutter eine Deregulierung des Magnetfeldes bewirkt. Ein weiterer Nachteil dieser Vorrichtung nach dem Stand der Technik ist die präzisionsmindernde Gleitreibung im Bereich der Längskeile/Längsnuten. Bedingt durch die bezüglich der Motoren axial völlig frei bewegliche Welle ergibt sich weiter eine rein mechanisch bedingte Ungenauigkeit welche bei einer elektronischen Steuerung durch das Fehlen einer stabilen Ausgangsposition für den Rechner zu einer weiteren Verminderung der Präzision führt. Aus den angeführten Gründen erwähnt diese Patentschrift lediglich Anwendungen bei denen es nicht auf Genauigkeit der Positionierung ankommt, nämlich Pumpen und Radantriebe.

### Afgabe der Erfindung

Der Erfindung liegt deshalb die Aufgabe zugrunde, eine Linear-Antriebsvorrichtung gemäss dem Oberbegriff des Anspruches 1 zu schaffen, welche die obengenannten Nachteile der Vorrichtungen gemäss dem Stand der Technik nicht aufweist und einen mechanisch einfachen, in der Herstellung billigen aber trotzdem höchste Präzision ermöglichenden Aufbau aufweist.

Die erfindungsgemässe Vorrichtung soll insbesondere unter Vermeidung von Gleitreibung, möglichst geringe Reibungsverluste aufweisen und vom Stillstand aus sofort die volle Schub-, bzw. Zugkraft ausüben können.

Damit jede Vorschubbewegung spielfrei und ohne Verzögerung stattfinden kann, sind Zwischengetriebe wie Zahnräder oder Schneckengetriebe vorzugsweise zu vermeiden.

Die beweglichen Teile sollen zudem derart abgeschirmt sein, dass einerseits keine Verschmutzung auftreten kann und anderseits die Verletzungsgefahr möglichst reduziert wird.

### Die Erfindung

Die Erfindung löst die gestellte Aufgabe mit einer Linear-Schubvorrichtung, die die Merkmale des Anspruchs 1 aufweist. Es sind verschiedene Ausführungsformen möglich. Die Mutter kann drehfest, aber axial verschiebbar im Antriebsrohr gelagert sein, sie treibt dann eine aus dem Gehäuse herausragende Schubstange. Die Mutter kann aber auch fest am Ende des

Antriebsrohres angeordnet sein und treibt dann zwei teleskopisch ineinander verschiebbare Gehäuseteile.

Im Nachfolgenden werden an Hand der Zeichnung einige Ausführungsbeispiele des Erfindungsgegenstandes beschrieben:

**Die Zeichnung:**

Die Zeichnung zeigt in

Figur 1 eine Linear-Schubvorrichtung mit zwei Motoren und einer aus dem Gehäuse herausragende Schubstange in Ansicht

Figur 2 einen vereinfachten Längsschnitt derselben Vorrichtung in perspektivischer Darstellung

Figur 3 eine Variante zur Vorrichtung nach Figur 1, in Ansicht und

Figur 4 einen vereinfachten Längsschnitt der Vorrichtung nach Figur 3 in perspektivischer Darstellung.

Figur 5 eine Linear-Schubvorrichtung mit zwei Motoren, die aneinander gegenüberliegenden Enden eines Gehäuses angeordnet sind, das aus zwei teleskopisch ineinander verschiebbaren Teilen besteht und

Figur 6 - 10

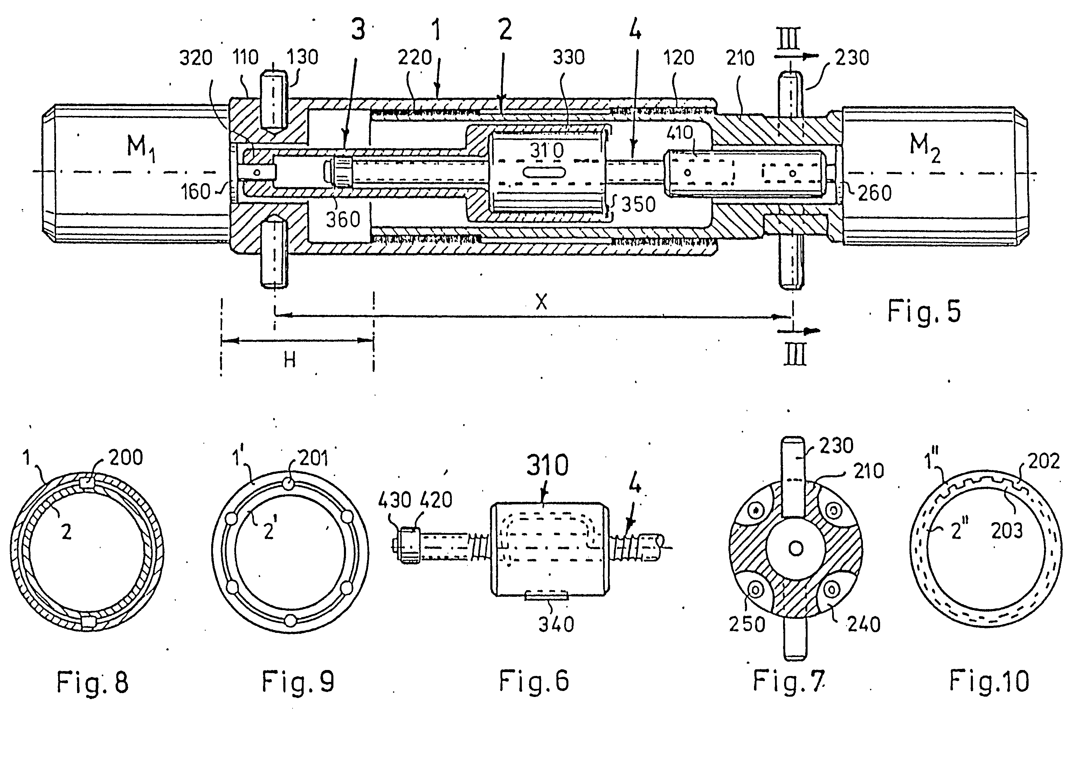

Details der Vorrichtung nach Figur 5

**Beschreibung der Zeichnungen**

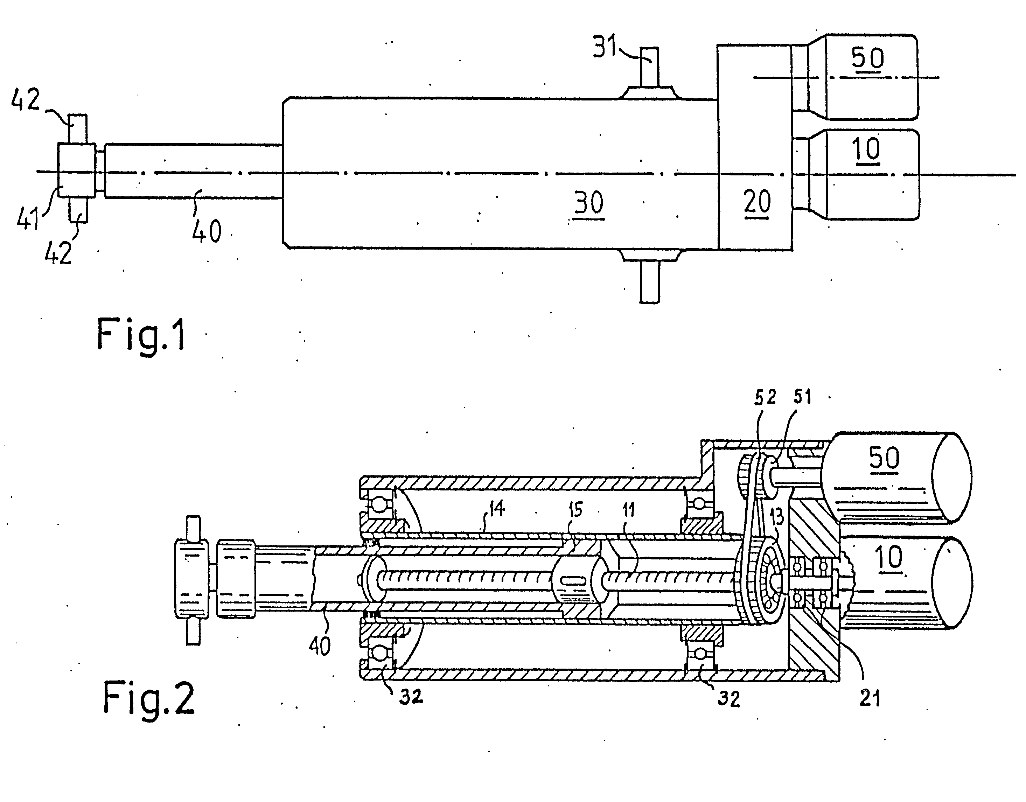

Die in Figur 1 dargestellte Linear-Schubvorrichtung hat zwei Elektromotoren 10 und 50, die auf einem Gehäuseteil 20 aufgebaut sind, in dem ein Getriebe untergebracht ist. An das Gehäuse 20 schliesst ein weiterer Gehäuseteil 30 an, in dem sich die eigentliche Vorschubeinrichtung mit Mutter und Schraubspindel befindet.

Aus dem Gehäuse 30 ragt die Schubstange 40 heraus, die mit einem drehbaren Kopf 41 versehen ist. Kopf 41 und das Gehäuse 30 sind beide mit Zapfen 42 beziehungsweise 31 versehen, um die Linear-Schubvorrichtung schwenkbar lagern zu können, im Falle, dass sie im Betrieb eine Schwenkbewegung ausführt. Sie kann natürlich auch nicht schwenkbar gehalten sein.

An Hand des vereinfachten Längsschnittes nach Figur 2 lässt sich die Wirkungsweise der Linear-Schubvorrichtung beschreiben. Der Elektromotor 10 treibt direkt die Schraubspindel 11. Auf der rückseitigen Fortsetzung der Schraubspindel 11 ist ein Zahnriemenrad 13 drehbar gelagert. Dieses Zahnriemenrad 13 wird von dem zweiten Motor 50 über das Zahnriemenrad 51 und dem, beide Räder 13 und 51 umschlingenden Zahnriemen 52 getrieben.

Das Zahnriemenrad 13 ist fest mit dem sechseckigen Antriebsrohr 14 verbunden, das im Gehäuse 30 drehbar gelagert ist.

Die beiden Lager sind mit 32 bezeichnet. In diesem Sechskantrohr 14 ist die mit der hohlen Schubstange 40 verbundene Mutter 15 gleitend verschiebbar angeordnet. Damit die sich beim Betrieb drehende Schub-Stange 40 axiale Kräfte aufnehmen kann, ist die Spindel 11, auf die sich die Mutter 15 abstützt, im Gehäuse 20 mittels den beiden Axiallagern 21 drehbar, aber axial fest im Gehäuseteil 20 gelagert. Das Axiallager könnte auch im Gehäuse des Motors 10 untergebracht sein.

Das Durchmesser- beziehungsweise das Zähnezahlverhältnis zwischen den beiden Zahnriemenrädern 51 und 13 sei gleich eins zu zwei. Macht Motor 10 - 1440 U/Minute und Motor 50 2880 U/Minute und werden beide Motoren im gleichen Drehsinn betrieben, macht sowohl die Schraubspindel 11 wie die vom Antriebsrohr 14 getriebene Mutter 15 - 1440 U/ Minute und ist die Vorschubgeschwindigkeit gleich Null. Wird die Tourenzahl des Motors 50 verringert, dreht sich die Mutter langsamer als die Spindel und wird die Schubstange 40 vorgeschoben. Wird dagegen die Tourenzahl des Motors 50 erhöht oder die Tourenzahl des Motors 10 verringert, wird die Schubstange 40 zurückgezogen. Wird beispielsweise der Motor 10 bis zum Stillstand abgebremst, steht die Schraubspindel 11 still und die Mutter wird mit 1440 U/Minute getrieben. Beträgt die Steigung des Gewindes der Schraubspindel 4 mm ist die Rückzuggeschwindigkeit der Schubstange 1440 x 4 = 5760 mm/Minute oder 95 mm/Sekunde. Umgekehrt verhält es sich, wenn Motor 50 bis zum Stillstand abgebremst wird; dann beträgt die Vorschubgeschwindigkeit 95 mm/Sekunde.

Vorzugsweise wird man für nur einen Motor eine Tourenzahl-Regelvorrichtung vorsehen. Beispielsweise könnte man einen Motor 10 verwenden, der konstant mit etwa 1000 U/ Minute läuft, während die Tourenzahl von Motor 50 zwischen 1000 U/Minute und 3000 U/Minute regelbar ist. Mit der Uebersetzung von 1: 2 der Räder 52 und 13 ergibt dies einen Regelbereich für die Relativ-Tourenzahl pro Minute zwischen der Mutter 15 und der Schraubspindel von + 500 über Null bis - 500. Dies würde bei einer Gewindesteigung von 4 mm einen Vorschubgeschwindigkeits-Regelbereich der Schubstange von +

$$\frac{500}{60}$$

x 4 = + 33,3 mm/Sekunden über Stillstand bis - 33,3 mm/Sekunden ergeben.

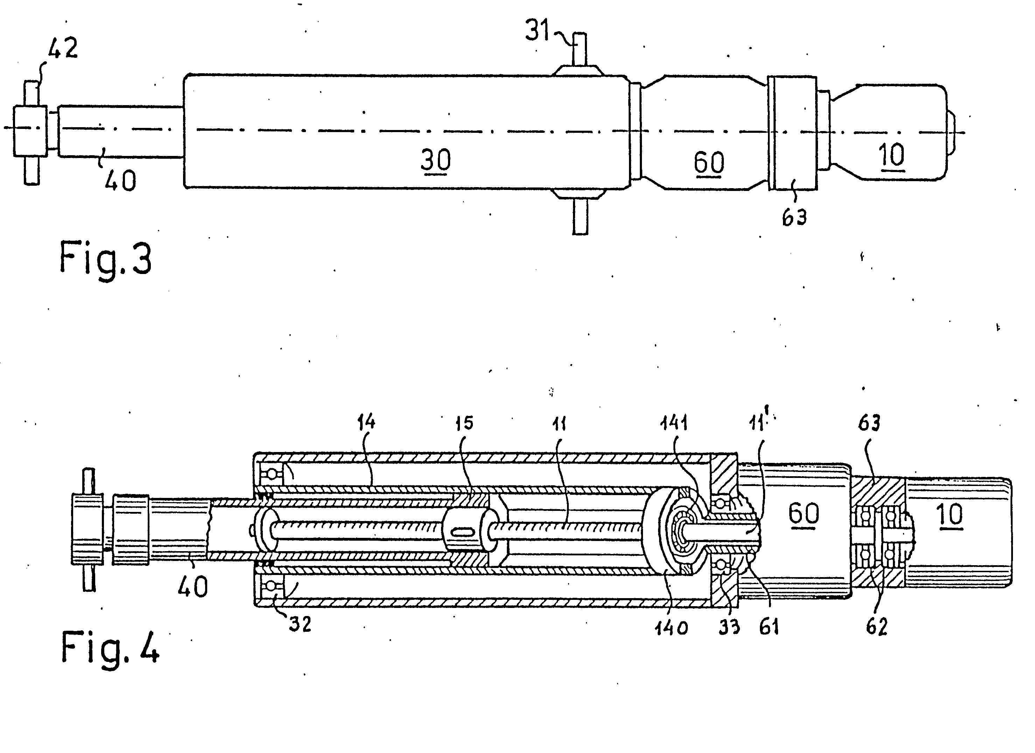

Die Figuren 3 und 4 zeigen eine Variante zur vorgängig beschriebenen Linear-Schubvorrichtung. Sie ist zwar im Aufbau verschieden, in ihrer Wirkungsweise aber sehr ähnlich der Vorrichtung nach Figur 1 und 2. Daher sind für gleichartige Teile dieselben Bezugszahlen wie bisher verwendet.

Das sechskantige Antriebsrohr 14 wird statt über ein Zwischengetriebe direkt vom Motor 60 angetrieben. Dazu ist das rückwärtige Ende des Rohres 14 mit einem Kupplungsstück 140 versehen, das in die Hohlwelle 61 des Motors 60 übergeht. Die Schraubspindel ist in diesem Kupplungsstück 140 mittels eines Radiallagers 141 drehbar gelagert. Die Fortsetzung 11' der Schraubspindel 11 ist durch die Hohlwelle 61 des Motors 60 hindurchgeführt und im Zwischenstück 63 mittels den Axiallagern 62 drehbar aber axial fest gehalten. Die Fortsetzung 11' der Schraubspindel ist mit der Welle des Motors 10 verbunden.

Laufen beide Motoren 10 und 60 mit derselben Tourenzahl und im gleichen Drehsinn, treiben sie die Schraubspindel 11 und das Antriebsrohr 14, das ja die Mutter 15 mitnimmt, mit derselben Tourenzahl an und damit ist die Vorschubgeschwindigkeit der Schubstange 40 gleich null.

Ist beispielsweise Motor 10 als Tourenzahlregulierbarer-Motor ausgebildet, beziehungsweise mit einer nicht dargestellten, beispielsweise elektronischen Reguliervorrichtung verbunden, lässt sich Vorschub und Rückziehen der Schubstange vom Stillstand aus regulieren. Die Vorschubbeziehungsweise Rückziehgeschwindigkeit ändert sich proportional zur Differenz der Tourenzahlen der beiden Motoren 10 und 60.

Natürlich ist es auch möglich, einen der beiden Motoren bis auf Null abzubremsen um so einen sehr raschen Vorschub oder ein sehr rasches Rückziehen der Schubstange 40 zu erzielen. Ganz extrem hoch wird der Vorschub oder die Rückziehgeschwindigkeit, wenn der Drehsinn eines Motors umgekehrt wird.

Der Antrieb der Linear-Vorschubvorrichtung mit zwei Motoren hat gegenüber dem Antrieb mit nur einem Motor den eminenten Vorteil, dass bereits vom Stillstand aus die volle Leistung zur Verfügung steht. Auch beim Stillstand der Schubstange 40 laufen beide Motoren.

Bei einer Linear-Vorschubvorrichtung, die mit nur einem Motor arbeitet, muss der Motor zuerst anlaufen, bis er seine volle Leistung abgeben kann.

Die Linear-Antriebsvorrichtung nach Figur 5 umfasst zwei teleskopisch ineinander verschiebbare, rohrförmige Gehäuseteile 1 und 2, deren äusseres Ende bei 110 beziehungsweise 210 verstärkt ist. An diesen verstärkten Enden ist jeweils ein Motor $M_1$ beziehungsweise $M_2$ befestigt. Die Lagerbüchse 220 auf dem inneren Rohr 2 und die im äusseren Rohr 1 angebrachte Lagerbüchse 120 sorgen für eine exakte Führung.

An den verstärkten Enden 110, 210 sind Zapfen 130, 230 angebracht, mit deren Hilfe die Antriebsvorrichtung mit den von ihr zu betätigenden Teilen verbindbar ist.

Figur 7 zeigt einen Schnitt längs der Linie III - III in Figur 5 aus dem ersichtlich ist, dass das verstärkte Gehäuseende 210 mit Ausnehmungen 240 versehen ist, in denen Innensechskantschrauben 250 Platz finden, mit denen der Motor $M_2$ befestigt ist. Motor $M_1$ ist von, im Innern des Gehäuseteiles 1 angebrachten Schrauben (die nicht dargestellt sind, um die Zeichnung zu zu überlasten) am verstärkten Gehäuseende 110 befestigt. Die Motorflansche beider Motoren $M_1$ und $M_2$ haben einen Bund 160 beziehungsweise 260, mit dem sie im verstärkten Gehäusende 110 beziehungsweise 210 genau zentriert sind.

Die Gehäuseteile 1 und 2 müssen zusätzlich gegen Verdrehung gesichert sein. In Figur 8 ist hierfür eine Lösung dargestellt, bei der im äusseren Rohr 1 zwei Längsnuten angebracht sind und im inneren Rohr 2 zwei Schiebekeile 200 eingelassen sind.

Die Figuren 9 und 10 zeigen andere Lösungen. Bei der Lösung nach Figur 9 sind im äusseren Rohr 1' und im inneren Rohr 2' parallel zur Rohrachse verlaufende Laufbahnen angebracht, in denen Kugeln 201 laufen. Eine solche Führung ist präzise und trotzdem leichtgängig.

In Figur 10 ist das äussere Rohr 1'' mit einer Anzahl Längsnuten versehen, die eine Art Innenverzahnung 202 bilden und das innere Rohr 2'' ist mit einer entsprechenden Aussenverzahnung 203 versehen. Eine solche Führung kann grosse Kräfte aufnehmen.

Statt runde, teleskopisch ineinander schiebbare Gehäuseteile zu verwenden, können die Teile 1,2 auch ein polygonales Querschnittsprofil, beispielsweise ein viereckiges oder sechseckiges Profil aufweisen. Dadurch würden sich besondere Mittel zur Sicherung gegen Verdrehung erübrigen.

Motor $M_1$ treibt mittels des Antriebsrohres 3 eine Kugel-Umlaufmutter 310. Ein Ende 320 des Antriebsrohres ist fest mit der welle des Motors $M_1$ verbunden, das andere Ende 330 ist glockenförmig erweitert, damit die Kugelumlaufmutter 310 darin Platz findet. Sie ist in dieses Ende eingepresst, durch einen Keil 340 gegen Verdrehung und durch einen Sicherungsring 350 zusätzlich gegen Verschiebung gesichert. Im, zwischen den beiden Enden liegenden Teil 360 des Antriebsrohres ist das Ende der Schraubspindel 4 verschiebbar und drehbar gelagert.

Motor $M_2$ treibt die Schraubspindel 4. Dazu ist die Welle des Motors $M_2$ mittels einer Kupplungsbüchse 410 mit einem Ende der Spindel 4 verbunden. Die Schraubspindel 4 hat ein den Kugeln der Kugelumlauf-Mutter 310 entsprechendes Gewinde, wie in Figur 6 ersichtlich ist. Das freie Ende der Schraubspindel ist mit einer, auf dem Spindelende drehbaren Lagerbüchse 420 versehen, die durch einen Sicherungsring 430 axial gehalten ist. Der Aussendurchmesser der Lagerbüchse ist so dimensioniert, dass sie gleitend im Antriebsrohr 360 verschiebbar ist. Diese zusätzliche Lagerung am freien Ende der Schraubspindel ist sehr wichtig, da sie ein Schwingen der Schraubspindel bei hohen Tourenzahlen verhindert.

Im Betrieb kann man mit einem oder mit beiden Motoren $M_1$ und $M_2$ arbeiten. Je nachdem lässt sich ein schleichender, ein mittlerer oder ein sehr rascher Vorschub erzielen. Unter Vorschub ist sowohl eine Vergrösserung des Abstandes x (Figur 1) als eine Verringerung zu verstehen. Beispielsweise ist es möglich, den Vorschub in Richtung Vergrösserung des Abstandes x schleichend (durch Betrieb beider Motoren aber mit geringer Tourenzahldifferenz) und den Vorschub in entgegengesetzter Richtung sehr rasch (durch Betrieb beider Motoren mit entgegengesetzter Drehrichtung) auszuführen. Dies wurde bereits in der Einleitung erwähnt. Die Führungen 120, 220 der Rohre 1, 2, die Länge der Spindel und die axiale Länge der Mutter 310 begrenzen die maximale Vorschublänge, das heisst den Hub, auf das Mass H (Figur 5).

Bei Verwendung einer Kugel-Umlaufmutter mit entsprechender Schraubspindel lassen sich hochpräzise Linearvorschub-Vorrichtungen herstellen, die ohne Spiel arbeiten. Die Motorwellen müssen natürlich sowohl radial wie axial spielfrei gelagert sein. In Fällen, wo es weniger auf Präzision ankommt, und mehr auf den Preis geachtet wird, kann statt der Kugel-Umlaufmutter eine einfache Bronzemutter oder Kunststoffmutter verwendet werden.

Statt radiale Zapfen 130, 230 als Angriff für eine Kraftübertragung zu verwenden, sind viele andere Lösungen möglich. Beispielsweise können die äusseren Lagerschilder der Motoren $M_1$, $M_2$ mit Angriffsösen versehen sein.


**Patentansprüche**

I. Linear-Antriebsvorrichtung mit einer Schraubspindel, einer Mutter und zwei Antriebsmotoren wovon der erste Antriebsmotor(10,$M_2$) die drehbare, bezüglich des Antriebsmotors axial fest gelagerte Schraubspindel (11,4) treibt,dadurch gekennzeichnet, dass der zweite Antriebsmotor (50;60;$M_1$) die Mutter (15;310) mit Hilfe eines koaxial zur Schraubspindel angeordneten,drehbaren, bezüglich des Antriebsmotors (50;60;$M_1$) axial fest gelagerten, das Antriebsmoment axial übertragenden Antriebsrohres (14; 3) treibt.

2. Linear-Antriebsvorrichtung nach Anspruch 1, dadurch gekennzeichnet, dass der zweite Motor (50;60) die Mutter (15) mit Hilfe eines Antriebsrohres (14) treibt in dem sie drehfest aber axial verschiebbar ist.

3. Linear-Antriebsvorrichtung nach Anspruch 1, dadurch gekennzeichnet, dass der zweite Motor ($M_1$) die Mutter (310) mit Hilfe eines Antriebsrohres (3) treibt an dessen äusseren Ende sie fest angeordnet ist.

4. Linear-Antriebsvorrichtung nach Anspruch 2, dadurch gekennzeichnet, dass beide Motoren (10, 50; 10, 60) an einem Ende eines Gehäuses (30) angeordnet sind, und dass die Mutter (15) mit einer koaxial zum Antriebsrohr (14) verlaufenden, im Antriebsrohr axial verschieblich gelagerten, aus dem Gehäuse (30) herausragenden Schubstange (40) verbunden ist.

5. Linear-Antriebsvorrichtung nach Anspruch 4, dadurch gekennzeichnet, dass beide Motoren (10, 50) nebeneinander angeordnet sind, und dass der zweite Motor (50) das Antriebsrohr (14) mit Hilfe eines Zwischengetriebes (13, 51, 52) antreibt.

6. Linear-Antriebsvorrichtung nach Anspruch 4, dadurch gekennzeichnet dass beide Motoren (10, 60) koaxial aufeinander aufgebaut sind, wobei der zuäussert angeordnete Motor (10) die Spindel treibt, während der zweite Motor (60) eine von der Schraubspindel (11, 11') durchsetzte Hohlwelle hat, die fest mit dem Antriebsrohr (14) verbunden ist.

7. Linear-Antriebsvorrichtung nach Anspruch 3, dadurch gekennzeichnet, dass die Motoren ($M_1$, $M_2$) an einander gegenüberliegenden Enden (110, 210) eines Gehäuses angeordnet sind, das zwei teleskopisch ineinander verschiebbare, gegen Verdrehung um ihre Achse gesicherte Teile (1, 2) umfasst, wobei ein Motor ($M_2$) fest mit der Schraubspindel (4), der zweite Motor ($M_1$) fest mit dem Antriebsrohr (3) verbunden ist, dessen Ende (330) die Mutter (310) trägt.

8. Linear-Antriebsvorrichtung nach Anspruch 6, dadurch gekennzeichnet, dass die Fortsetzung (11') der Schraubspindel hinter dem ersten Motor (60) axial gelagert ist.

9. Linear-Antriebsvorrichtung nach Anspruch 5, dadurch gekennzeichnet, dass das Getriebe (13, 51, 52) ein Zahnriemen-Getriebe ist.

10. Linear-Antriebsvorrichtung nach Anspruch 5, dadurch gekennzeichnet, dass das Getriebe ein Reibrad-Getriebe ist.

11. Linear-Antriebsvorrichtung nach Anspruch 5, dadurch gekennzeichnet, dass das Getriebe ein Zahnrad-Getriebe ist.

12. Linear-Antriebsvorrichtung nach Anspruch 1, dadurch gekennzeichnet, dass die Mutter (15) eine Kugel-Umlaufmutter ist, und dass die Schraubspindel mit einem entsprechenden Gewinde versehen ist.

13. Linear-Antriebsvorrichtung nach Anspruch 1, dadurch gekennzeichnet, dass die Mutter (15) aus Kunststoff hergestellt ist.

14. Linear-Antriebsvorrichtung nach Anspruch 7, dadurch gekennzeichnet, dass das Antriebsrohr an seinem, dem Motor abgewendeten Ende (330) glockenförmig erweitert ist, in dem eine Kugel-Umlaufmutter (310) untergebracht ist.

15. Linear-Antriebsvorrichtung nach Anspruch 7, dadurch gekennzeichnet, dass die beiden teleskopisch ineinander verschiebbaren Teile (1, 2) durch mindestens eine im äusseren Teil innen angebrachte Längsnut und mindestens eine am inneren Teil angeordnete Feder (200) gegen Verdrehung gesichert sind.

16. Linear-Antriebsvorrichtung nach Anspruch 7, dadurch gekennzeichnet, dass die beiden teleskopisch ineinander verschiebbaren Teile durch eine Vielzahl von aussen am inneren Teil (2'') und eine entsprechende Anzahl von innen am äusseren Teil (1'') angebrachten Längsnuten (202, 203) gegen Verdrehung gesichert sind.

17. Linear-Antriebsvorrichtung nach Anspruch 7, dadurch gekennzeichnet, dass die beiden teleskopisch ineinander verschiebbaren Teile (1', 2') mit innen im äusseren Teil und aussen am inneren Teil angebrachte, Laufbahnen bildende Längsnuten versehen sind, in denen sich Kugeln (201) befinden, welche die Teile gegen Verdrehung sichern.

18. Linear-Antriebsvorrichtung nach Anspruch 7, dadurch gekennzeichnet, dass die beiden teleskopisch ineinander verschiebbaren Teile ein polygonales Querschnittsprofil aufweisen.

19. Linear-Antriebsvorrichtung nach Anspruch 7, dadurch gekennzeichnet, dass das freie Ende des äusseren Teile durch ein ringförmiges Dichtungselement gegen das innere Teil verschiebbar abgedichtet ist.

20. Linear-Antriebsvorrichtung nach einem der Ansprüche 1 bis 19, dadurch gekennzeichnet, dass ein Gehäuse (20,30; 63; 1,2) sämtliche drehbaren Teile umschliesst.

21. Linear-Antriebsvorrichtung nach einem der Ansprüche 1 bis 20, dadurch gekennzeichnet, dass die Tourenzahlen der beiden Antriebsmotoren ($M_2$,$M_1$) eine nur geringe Differenz aufweisen zur Erzielung eines schleichenden Vorschubes bei gleichsinniger Drehrichtung der Motoren.

**Claims**

1. Linear drive device with a threaded rod and a nut and two drive motors whereby the first drive motor (10,$M_2$) drives the threaded rod (11,4) which is with regard to the drive motor axially firmly mounted rotatably, characterized by the fact that the second drive motor (50; 60; $M_1$) drives the nut (15; 310) with the aid of a drive tube (14; 3) which is with regard to the drive motor (50; 60; $M_1$) axially firmly mounted rotatably and arranged coaxially to the threaded rod and which transmits the driving moment axially.

2. Linear drive device according to Claim 1, characterized by the fact that the second motor (50; 60) drives nut (15) with the aid of a drive tube (14) in which it is mounted non-rotatably but axially shiftable.

3. Linear drive device according to Claim 1, characterized by the fact that the second motor ($M_1$) drives nut (310) with the aid of drive tube (3) on the outer end of which it is firmly arranged.

4. Linear drive device according to Claim 2, characterized by the fact that both motors (10, 50; 10, 60) are arranged on the end of a housing (30), and that the nut (15) is connected with a connecting rod (40) jutting out of housing (30), mounted in an axially shiftable manner in the drive tube, running coaxially with the drive tube (14).

5. Linear drive device according to Claim 4, characterized by the fact that both motors (10, 50) are arranged beside each other, and that the second motor (50) drives the drive tube (14) with the aid of an intermediate drive (13, 51, 52).

6. Linear drive device according to Claim 4, characterized by the fact that both motors (10, 60) are designed coaxially on each other, whereby the outermost motor (10) drives the rod, while the second motor (60) has a hollow shaft with a threaded rod (11, 11') through it, which is firmly connected with the drive tube (14).

7. Linear drive mechanism according to Claim 3, characterized by the fact that the motors ($M_1$, $M_2$) are arranged on opposite lying ends (110, 210) of a housing, which includes two parts (1, 2) locked against rotating around their axis, and movable into each other telescopically, whereby one motor ($M_2$) is firmly connected with the threaded rod (4), the second motor ($M_1$) is firmly connected with drive tube (3), the end of which (330) bears nut (310).

8. Linear drive device according to Claim 6, characterized by the fact that the continuation (11') of the threaded rod is axially mounted behind the first motor (60).

9. Linear drive device according to Claim 5, characterized by the fact that the gear unit (13, 51, 52) is a toothed belt gearing unit.

10. Linear drive device according to Claim 5, characterized by the fact that the gear unit is a friction wheel gear unit.

11. Linear drive device according to Claim 5, characterized by the fact that one gear unit is a gear drive.

12. Linear drive device according to Claim 1, characterized by the fact that the nut (15) is a ball rotating nut, and that the threaded rod is provided with a suitable thread.

13. Linear drive device according to Claim 1, characterized by the fact that nut (15) is made of plastic.

14. Linear drive device according to Claim 7, characterized by the fact that the drive tube is widened in a bell-shaped manner on its end (330) turned away from the motor, in which a ball rotating nut (310) is housed.

15. Linear drive device according to Claim 7, characterized by the fact that both parts (1,2) telescopically movable into each other are locked against turning by at least a lengthwise groove arranged inside on the outer part and at least one spring (200) arranged on the inner part.

16. Linear drive device according to Claim 7, characterized by the fact that both parts which can be shifted telescopically into each other are locked against turning by a large number of lengthwise grooves (202, 203) mounted from the outside on the inner part (2'') and a corresponding number mounted on the outer part (1'') from the inside.

17. Linear drive device according to Claim 7, characterized by the fact that parts (1', 2') telescopically movable into each other are provided with lengthwise grooves forming raceways, mounted inside on the outer part and outside on the inner part, in which there are ball bearing (201) which assure the parts against rotation.

18. Linear drive device according to Claim 7. characterized by the fact that both parts, telescopically shiftable into each other, exhibit a polygonal cross sectional profile.

19. Linear drive device according to Claim 7, characterized by the fact that the free end of the outer part is shiftably sealed against the inner part by a ring-shaped sealing element.

20. Linear drive device according to one of the claims 1 to 19. characterized by the fact that all rotatable parts are contained in a housing (20,30; 63; 1,2).

21. Linear drive device according to one of the claims 1 to 20, characterized by the fact that the revolution speed of the two drive motors (M2, M1) differ only slightly in order to achieve a crawling, very slow linear motion when operated in the same rotational direction.


**Revendications**

1. Dispositif de mouvement linéaire avec une vis, un écrou et deux moteurs de commande dont le premier moteur de commande (10,M2) actionne la vis (11,4) rotative qui est logée par rapport au moteur de commande de manière axialement ferme, caractérisé en ce que le deuxième moteur de commande (50; 60; M1) actionne l'écrou (15;310) à l'aide d'un tube de commande (14;3) rotatif, disposé coaxialement par rapport à la vis et logé de manière axialement ferme par rapport au moteur de commande (50;60;M1) et transmettant axialement le couple de entraînement.

2. Dispositif de mouvement linéaire selon la revendication 1, caractérisé en ce que le deuxième moteur (50;60) actionne l'écrou (15) à l'aide d'un tube de commande (14) dans lequel l'écrou (15) est logé de manière non-rotative mais axialement déplaçable.

3. Dispositif de mouvement linéaire selon la revendication 1, caractérisé en ce que le deuxième moteur (M1) actionne l'écrou (310) à l'aide d'un tube de commande (3) à l'extrémité duquel l'écrou (310) est disposé de manière fixe.

4. Dispositif de mouvement linéaire selon la revendication 2, caractérisé en ce que les deux moteurs (10,50;10,60) sont disposés à l'extrémité d'un boîtier (30) et que l'écrou (15) est relié à une bielle (40) sortant du boîtier (30) laquelle est disposée coaxialement au tube de commande (14) dans lequel elle est logée axialement déplaçable.

5. Dispositif de mouvement linéaire selon la revendication 4, caractérisé en ce que les deux moteurs (10,50) sont disposés l'un à coté de l'autre et que le deuxième moteur (50) actionne le tube de commande (14) à l'aide d'une transmission intermédiaire (13,51,52).

6. Dispositif de mouvement linéaire selon la revendication 4, caractérisé en ce que les deux moteurs (10,60) sont disposés coaxialement l'un sur l'autre, de sorte que le moteur à l'extrémité (10) actionne la vis tandis que le deuxième moteur (60) comprend un arbre creux traversé par la vis (11,11') et relié de manière fixe au tube de commande (14).

7. Dispositif de mouvement linéaire selon la revendication 3, caractérisé en ce que les moteurs (M1,M2) sont disposés aux extrémités opposées (110,210) d'un boîtier, comprenant deux parties (1,2) coulissantes télescopiquement et assurées contre une rotation axiale, un moteur (M2) étant relié de manière fixe à la vis (4), le deuxième moteur (M1) étant relié de manière fixe au tube de commande (3), l'extrémité duquel porte 1,écrou (310).

8. Dispositif de mouvement linéaire selon la revendication 6, caractérisé en ce que la continuation (11') de la vis est logée axialement dernière le premier moteur (60).

9. Dispositif de mouvement linéaire selon la revendication 5, caractérisé en ce que la transmission (13,51,52) est un engrenage à courroie dentée.

10. Dispositif de mouvement linéaire selon la revendication 5, caractérisé en ce que la transmission (13,51,52) est un engrenage à friction.

11. Dispositif de mouvement linéaire selon la revendication 5, caractérisé en ce que la transmission est une transmission par engrenage.

12. Dispositif de mouvement linéaire selon la revendication 1, caractérisé en ce que l'écrou (15) est un écrou rotatif sphérique et que la vis est pourvue d'un filetage correspondant.

13. Dispositif de mouvement linéaire selon la revendication 1, caractérisé en ce que l'écrou (15) est fabriqué en plastique.

14. Dispositif de mouvement linéaire selon la revendication 7, caractérisé en ce que le tube de commande est élargi en forme de cloche à son extrémité(330) détournée du moteur, dans laquelle est logé un écrou rotatif sphérique (310).

15. Dispositif de mouvement linéaire selon la revendication 7, caractérisé en ce que les deux parties (1,2) coulissantes télescopiquement sont assurées contre rotation par au moins une rainure longitudinale placée à l'intérieur de la partie extérieure et au moins un ressort (200) placé sur la partie intérieure.

16. Dispositif de mouvement linéaire selon la revendication 7, caractérisé en ce que les deux parties coulissantes télescopiquement sont assurées contre rotation par une pluralité de rainures longitudinales (203) placées à l'extérieur de la partie intérieure (2'') et un nombre correspondant de rainures longitudinales (202) placées à l'intérieur de la partie extérieure (1'').

17. Dispositif de mouvement linéaire selon la revendication 7, caractérisé en ce que les deux parties coulissantes télescopiquement (1',2') sont pourvues à l'intérieur de la partie extérieure et à l'extérieur de la partie intérieure de rainures longitudinales formant desvoies de roulement dans lesquelles se trouvent des billes (201) assurant les parties contre rotation.

18. Dispositif de mouvement linéaire selon la revendication 7, caractérisé en ce que les deux parties coulissantes télescopiquement ont un profil en travers de forme polygonale.

19. Dispositif de mouvement linéaire selon la revendication 7, caractérisé en ce que l'extrémité libre de la partie extérieure est rendue étanche contre la partie intérieure de mànière mobile par un élément d'étanchéité annulaire.

20. Dispositif de mouvement linéaire selon une des revendications 1 à 19, caractérisé en ce que un boîtier (20,30; 63; 1,2) enferme toutes les parties rotatives.

21. Dispositif de mouvement linéaire selon une des revendications 1 à 20, caractérisé en ce que les nombres de tours des deux moteurs de commande (M₂,M₁) présentent seulement une petite différence, de manière à obtenir un mouvement linéaire rampant si les moteurs sont actionnés dans le même sens.

Fig.1

Fig.2

**Fig.3**

**Fig.4**

0 097 169

Fig. 5

Fig. 8    Fig. 9    Fig. 6    Fig. 7    Fig.10

0 097 169